(19) Europäisches Patentamt
European Patent Office
Office européen des brevets

(11) **EP 2 961 218 A1**

(12) **EUROPEAN PATENT APPLICATION**
published in accordance with Art. 153(4) EPC

(43) Date of publication:
**30.12.2015 Bulletin 2015/53**

(51) Int Cl.:
***H04W 28/18*** (2009.01)

(21) Application number: **14783339.6**

(22) Date of filing: **09.04.2014**

(86) International application number:
**PCT/CN2014/074936**

(87) International publication number:
**WO 2014/166379 (16.10.2014 Gazette 2014/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **09.04.2013 CN 201310121350**

(71) Applicant: **Huawei Device Co., Ltd.
Shenzhen, Guangdong 518129 (CN)**

(72) Inventors:
• **DU, Zhenguo
Shenzhen
Guangdong 518129 (CN)**
• **FANG, Ping
Shenzhen
Guangdong 518129 (CN)**
• **DING, Zhiming
Shenzhen
Guangdong 518129 (CN)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(54) **METHOD AND DEVICE FOR RESOURCE RESERVATION**

(57) A resource reservation method and apparatus applied to a WiFi system is disclosed, where the method includes: receiving, by a destination node, a resource reservation request sent by a source node, and sending a resource reservation response to the source node, where the resource reservation response includes a reservation time, and the resource reservation response is used to enable another node, which can monitor the resource reservation response, in the WiFi system to set a network allocation vector of the another node according to the reservation time; determining, by the destination node, whether data sent by the source node is received within a predetermined time; and if the data is not received, sending a resource release instruction, so that the another node initializes the network allocation vector of the another node, and re-contends for a resource, thereby solving a hidden node problem and also ensuring that a network resource is fully and properly used.

A destination node receives a resource reservation request sent by a source node, and sends a resource reservation response to the source node, where the resource reservation response includes a reservation time, and the resource reservation response is used to enable another node, which can monitor the resource reservation response, in a WiFi system to set a network allocation vector of the another node according to the reservation time — 101

The destination node determines whether data sent by the source node is received within a predetermined time; and if the data is not received, sends a resource release instruction to the another node, so that the another node initializes the network allocation vector of the another node, and re-contends for a resource — 102

FIG. 2

## EP 2 961 218 A1

### Description

This application claims priority to Chinese Patent Application No. 201310121350.9, filed with the Chinese Patent Office on April 9, 2013, which is incorporated herein by reference in its entirety.

### TECHNICAL FIELD

The present invention relates to the field of communications technologies, and in particular, to a resource reservation method and apparatus.

### BACKGROUND

To resolve a "hidden node" problem that exists in a WiFi network, an RTS/CTS (Request To Send/Clear To Send, request to send/clear to send) mechanism is introduced in the IEEE802.11 standard, where the mechanism is equivalent to a handshake protocol, and a basic principle of the mechanism is that a source node and a destination node separately send a short frame used to reserve a resource, so as to suppress another node from contending for the resource. A specific process may be summarized as follows:

First, the source node sends an RTS (Request To Send, request to send) frame to another node in the network, so that a node that monitors the frame sets a NAV (Network Allocation Vector, network allocation vector) of the node according to a time T1 indicated by a duration domain Duration in the RTS frame, and further avoids, in a NAV countdown manner, contending a resource with the source node.

Then, after receiving the RTS frame, the destination node sends a CTS (Clear To Send, clear to send) frame to another node in the network after an interval of one SIFS (Short Interframe Space, short interframe space), so that a node that monitors the frame sets a NAV of the node according to a T2 indicated by a Duration domain in the CTS frame, and further avoids, in the NAV countdown manner, contending a resource with the destination node.

Finally, after receiving the CTS frame, the source node performs data transmission with the destination node after an internal of one SIFS.

NAVs of all nodes that receive the RTS frame or the CTS frame are greater than a default value 0, and so long as a NAV is greater than 0, a node considers that data transmission exists around and a channel is in a busy state; therefore, the node does not attempt to contend for the channel, thereby effectively avoiding a node collision. It should be noted that, although the destination node and the source node may also set a NAV value of themselves according to the RTS frame or the CTS frame, the two nodes does not need to determine a channel status according to the NAV value.

However, due to influence of interference or random noise, a channel of a WiFi system is usually in an unstable state, and a case in which transmission of the CTS frame fails or the source node fails to parse the CTS frame may occur, which further causes that the source node does not send a subsequent data frame any longer; as a result, the destination node cannot receive, upon expiry of an interval of one SIFS after sending a CTS frame, a data frame sent by the source node. However, after the destination node sends the CTS frame, nodes that can monitor the frame have already set a NAV of themselves according to a time T2. Before the NAV returns to zero, these nodes continues to consider that the channel is in the busy state, and transmission by these nodes is suppressed, which causes a waste of a channel resource in this period of time, and reduces a utilization rate of a network resource.

### SUMMARY

A resource reservation method and apparatus in embodiments of the present invention are used to improve resource utilization of a WiFi system.

Therefore, the embodiments of the present invention provide the following technical solutions:

According to a first aspect, an embodiment of the present invention provides a resource reservation method, where the method is applied to a WiFi system, and the method includes:

receiving, by a destination node, a resource reservation request sent by a source node, and sending a resource reservation response to the source node, where the resource reservation response includes a reservation time, and the resource reservation response is used to enable another node, which can monitor the resource reservation response, in the WiFi system to set a network allocation vector of the another node according to the reservation time; and

determining, by the destination node, whether data sent by the source node is received within a predetermined time; and if the data is not received, sending a resource release instruction, so that the another node initializes the network allocation vector of the another node, and re-contends for a resource.

In a first possible implementation manner of the first aspect, before the sending a resource release instruction to the another node, the method further includes:

obtaining a remaining time of the reservation time by calculation, and comparing the remaining time with a time required for sending the resource release instruction; and if the remaining time is not less than the time required for sending the resource release instruction, sending the resource release instruction to the another node, where the remaining time is a difference between the reservation time and the predetermined time.

With reference to the first aspect and the first possible implementation manner of the first aspect, in a second possible implementation manner, the resource reservation response is a first resource reservation response that is sent upon expiry of an interval of one first interframe space after the destination node receives the resource reservation request; and

the sending a resource release instruction to the another node includes:

sending, by the destination node, a first resource release instruction to the another node, so that the another node initializes the network allocation vector according to the first resource release instruction.

With reference to the first aspect and the first possible implementation manner of the first aspect, in a third possible implementation manner, the resource reservation response is a second resource reservation response that is sent upon expiry of an interval of one first interframe space, one first resource reservation response, and one second interframe space after the destination node receives the resource reservation request; and
the sending a resource release instruction to the another node includes:

sending, by the destination node, a first resource release instruction to the another node, and sending a second resource release instruction to the another node after an interval of one first interframe space, so that the another node initializes the network allocation vector according to the first resource release instruction or the second resource release instruction.

With reference to the first aspect and any possible implementation manner of the first to third possible implementation manners of the first aspect, in a fourth possible implementation manner,

$$\text{the predetermined time } T = \text{aSIFSTime} + \text{aPHY-RX-START-Delay} + \text{aSlotTime};$$

where aSIFSTime is a first interframe space; aPHY-RX-START-Delay is a physical layer response time; aSlotTime is a timeslot length.

With reference to the first aspect and any possible implementation manner of the first to fourth possible implementation manners of the first aspect, in a fifth possible implementation manner, a manner of obtaining the resource release instruction is as follows:

modifying any one of the resource reservation response, an acknowledgment frame, and a null data packet to obtain the resource release instruction; or
using a contention-free end frame as the resource release instruction; or
constructing a new control frame as the resource release instruction.

With reference to the fifth possible implementation manner of the first aspect, in a sixth possible implementation manner, if the resource release instruction is obtained by modifying the resource reservation response or the acknowledgment frame, a resource release indication bit is any reserved bit in a frame control domain; or
if the resource release instruction is obtained by modifying the resource reservation response or the acknowledgment frame, a resource release indication bit is any reserved combination in a duration domain; or
if the resource release instruction is obtained by modifying the null data packet, a resource release indication bit is any reserved combination in a modulation and coding scheme domain; where
the resource release indication bit is used to instruct the another node to initialize the network allocation vector of the another node.

With reference to the sixth possible implementation manner of the first aspect, in a seventh possible implementation manner, if the resource release indication bit is any reserved bit in the frame control domain, a duration domain of the resource reservation response is set to a default value of the network allocation vector.

According to a second aspect, an embodiment of the present invention provides a resource reservation apparatus, where the apparatus is applied to a WiFi system, and the apparatus includes:

a receiving unit, configured to receive a resource reservation request sent by a source node;
a sending unit, configured to send a resource reservation response to the source node after the resource reservation request is received, where the resource reservation response includes a reservation time, and the resource reservation response is used to enable another node, which can monitor the resource reservation response, in the WiFi system to set a network allocation vector of the another node according to the reservation time;
a first determining unit, configured to determine whether data sent by the source node is received within a predetermined time; and
a resource releasing unit, configured to, when the first determining unit determines that the data sent by the source node is not received, send a resource release instruction to the another node, so that the another node initializes the network allocation vector of the another node, and re-contends for a resource.

In a first possible implementation manner of the second aspect, the apparatus further includes:

a calculating unit, configured to obtain a remaining time of the reservation time by calculation, where the remaining time is a difference between the reservation time and the predetermined time; and
a second determining unit, configured to compare the remaining time with a time required for sending the resource release instruction by the resource releasing unit; and if the remaining time is not less than the time required for sending the resource release instruction, instruct the resource releasing unit to send the resource release instruction to the another node.

With reference to the second aspect and the first possible implementation manner of the second aspect, in a second possible implementation manner, the sending unit is specifically configured to send a first resource reservation response to the source node upon expiry of an interval of one first interframe space after the resource reservation request is received; and then
the resource releasing unit is specifically configured to send a first resource release instruction to the another node, so that the another node initializes the network allocation vector according to the first resource release instruction.

With reference to the second aspect and the first possible implementation manner of the second aspect, in a second possible implementation manner, the sending unit is specifically configured to send a second resource reservation response to the source node upon expiry of an interval of one first interframe space, one first resource reservation response, and one second interframe space after the resource reservation request is received; and then
the resource releasing unit is specifically configured to send a first resource release instruction to the another node, and after an interval of one first interframe space, send a second resource release instruction to the another node, so that the another node initializes the network allocation vector according to the first resource release instruction or the second resource release instruction.

With reference to the second aspect and any possible implementation manner of the first to the third possible implementation manners of the second aspect, in a fourth possible implementation manner, a predetermined time T during which the first determining unit determines whether the data sent by the source node is received is as follows:

$$T = aSIFSTime + aPHY\text{-}RX\text{-}START\text{-}Delay + aSlotTime;$$

where aSIFSTime is a first interframe space; aPHY-RX-START-Delay is a physical layer response time; aSlotTime is a timeslot length.

According to the resource reservation method and apparatus in the embodiments of the present invention, after receiving a resource reservation request of a source node, a destination node first returns a resource reservation response that includes a reservation time to the source node, thereby controlling another node that can monitor the resource reservation response and in a system to set a network allocation vector of the another node according to the reservation time, which avoids a collision with a data sending process of the source node on the destination node; then the destination node further determines whether the source node sends data to the destination node within a predetermined time, and if the data is not sent, ends a transmission suppression process on the another node in advance by using a resource release instruction, thereby solving a hidden node problem and also ensuring that a network resource is fully and properly used.

BRIEF DESCRIPTION OF DRAWINGS

To describe the technical solutions in the embodiments of the present application or in the prior art more clearly, the following briefly introduces the accompanying drawings required for describing the embodiments or the prior art. Apparently, the accompanying drawings in the following description show merely some embodiments recorded in the present application, and a person of ordinary skill in the art may still derive other drawings from these accompanying drawings.

FIG. 1 is a schematic structural diagram of a hidden node;
FIG. 2 is a flowchart of a resource reservation method according to Embodiment 1 of the present invention;
FIG. 3 is a schematic diagram of an RTS/CTS mechanism in the prior art;
FIG. 4 is a schematic diagram of using an RTS/CTS mechanism of a solution according to the present invention;
FIG. 5a is a format diagram of an SIG domain in a preamble in a standard earlier than an 802.11n standard;
FIG. 5b is a format diagram of an SIG domain in a preamble in an 802.11n standard;
FIG. 6 is a schematic structural diagram of a CTS/ACK frame;
FIG. 7 is a schematic structural diagram of a Frame Control domain;
FIG. 8 is a schematic diagram of using of a Duration domain;
FIG. 9 is a schematic structural diagram of a CF-End frame;
FIG 10 is a flowchart of a resource reservation method according to Embodiment 2 of the present invention;
FIG. 11 is a schematic diagram of an application manner of the present invention in a double CTS mechanism;
FIG. 12 is a schematic diagram of another application manner of the present invention in a double CTS mechanism;
FIG 13 is a schematic diagram of a resource reservation apparatus according to Embodiment 1 of the present invention;
FIG. 14 is a schematic diagram of a resource reservation apparatus according to Embodiment 2 of the present invention; and
FIG. 15 is a hardware constitution diagram of a resource reservation apparatus according to the present invention.

## DESCRIPTION OF EMBODIMENTS

In order to enable a person skilled in the art to better understand the solutions in the present invention, the following describes the embodiments of the present invention in more detail with reference to accompanying drawings and implementation manners.

In an existing WiFi system, a hidden node problem seriously affects performance of a wireless network. The so-called hidden node refers to that node A can be seen by node B, but cannot be seen by node C that communicates with node B, and therefore, node C is a hidden node for node A.

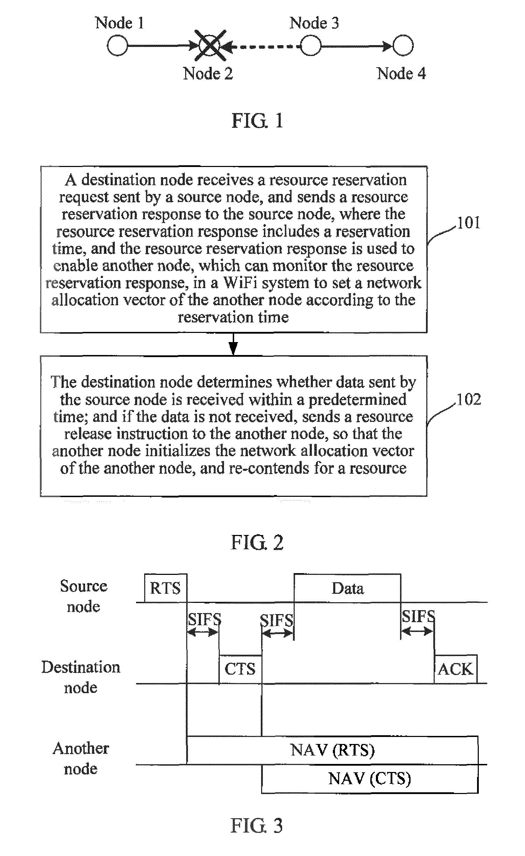

The following describes a process of affecting network performance by a hidden node with reference to a schematic diagram shown in FIG 1. Node 3 is a hidden node of node 1, that is, node 3 cannot monitor a signal sent by node 1. If node 1 sends data to node 2 at a current moment, because node 3 does not know whether communication is performed between node 1 and node 2, and in this case, node 3 may also send data to node 2. As a result, node 3 collides with node 1 on node 2, which causes a receiving error of node 2, so that this transmission opportunity (Transmission Opportunity, TXOP) is wasted. In addition, if positions where nodes in a WiFi system are deployed are close, although node 3 does not send data to node 2 and instead, send data to node 4 at a same moment, that node 2 receives data sent by node 1 may be interfered because node 3 sends data to node 4, which may cause a receiving error of node 2, and reduce transmission performance of a wireless network.

An RTS/CTS (Request To Send/Clear To Send, request to send/clear to send) mechanism that is proposed for solving this problem may be understood as that: before establishing communication with a destination node (node 2 in the foregoing example may be considered as a destination node), a source node (node 1 in the foregoing example may be considered as a source node) first sends an RTS frame to the destination node to apply for a resource, and enables, by using the RTS frame, a node that can monitor the frame to set a NAV of the node according to the frame, thereby suppressing data transmission of those nodes, and avoiding a collision with the source node. Accordingly, after receiving the RTS frame, the destination node sends a CTS frame to the source node, and enables a node (such as node 3 in the foregoing example) that can monitor the CTS frame to set a NAV of the node according to the CTS frame, thereby suppressing data transmission of this part of nodes, and avoiding a collision with the destination node. In this way, a case in which transmission by a hidden node of the source node collides with transmission by the source node does not occur.

Besides solving the hidden node problem, the RTS/CTS mechanism also brings a new problem, that is, a resource waste problem that occurs after CTS frame transmission between the source node and the destination node fails or parsing of the CTS frame by the source node fails. The technical solutions in the present invention are proposed for resolving this new problem.

The following describes a resource reservation method that is in the present invention.

Referring to FIG 2, FIG. 2 shows a flowchart of a resource reservation method according to Embodiment 1 of the present invention, where the method is applied to a WiFi system, and the method includes:

Step 101: A destination node receives a resource reservation request sent by a source node, and sends a resource reservation response to the source node, where the resource reservation response includes a reservation time, and the resource reservation response is used to enable another node, which can monitor the resource reservation response, in the WiFi system to set a network allocation vector of the another node according to the reservation time.

To avoid a collision between nodes, before establishing communication with the destination node, the source node first sends the resource reservation request to the destination node. As an implementation manner of the request, the request may be expressed as an RTS frame. Nodes that receive the RTS frame may be classified into two types according to a processing action.

One type is the destination node, where the node is a node with which the source node wants to establish communication. Therefore, upon expiry of an interval of one SIFS after receiving the RTS frame, the node needs to send a resource reservation response to the source node. As an implementation manner of the response, the response may be expressed as a CTS frame.

The other type is another node except the destination node. This type of node can monitor data sent by the source node, and may further be a hidden node of the destination node. Therefore, the source node needs to control, by using the RTS frame, this type of node to set a NAV of this type of node, so that this type of node may determine usage of a resource according to a size of the NAV. Referring to a schematic diagram shown in FIG. 3, it can be learned that, the NAV set by this type of node is (CTS_Time+Data_Time+ACK_Time+3×SIFS), where CTS_Time is a time for sending the CTS frame by the destination node; Data_Time is a time for transmitting a data frame by the source node; ACK_Time is a time for sending an acknowledgment frame by the destination node after data transmission is completed; and SIFS is a short interframe space.

It should be noted that, the destination node also sets a NAV of the destination node according to the RTS frame, but the destination node does not need to determine usage of a resource by using the NAV set by the destination node. A purpose of setting the NAV by the destination node in the present invention is not temporarily described herein.

Certainly, nodes that receive the CTS frame may also be classified into two types according to a processing action:

One type is the source node, where the node wants to send data to the destination node. Therefore, after receiving the CTS frame and after an interval of one SIFS, the source node transfers a data frame to the destination node.

The other type is another node except the source node. This type of node can monitor data sent by the destination node, may further be a hidden node of the source node, and affects data receiving of the destination node. Therefore, the destination node needs to control, by using the CTS frame, this type of node to set a NAV of this type of node, so that this type of node may determine usage of a resource according to a size of the NAV. Referring to FIG. 3, it can be learned that the NAV set by this type of node is (Data_Time+ACK_Time+2×SIFS).

It should be noted that, the source node may also set a NAV of the source node according to the CTS frame. However, because the source node needs to send data to the destination node by using an occupied resource, the source node does not need to determine usage of a resource by using the NAV, and setting the NAV by the source node is no more described in the present invention.

This step refers to a process in which a node that can monitor the CTS frame sets a NAV of the node according to the CTS frame, where the reservation time is the foregoing (Data_Time+ACK_Time+2×SIFS).

It should be noted that, in the present invention, a resource may be specifically expressed as a wireless channel resource, and a node may be expressed as a wireless access point AP (Access Point) or a station device STA (Station) such as a mobile phone, which may be determined by an actual application situation, and is not further limited.

Step 102: The destination node determines whether data sent by the source node is received within a predetermined time; and if the data is not received, sends a resource release instruction to the another node, so that the another node initializes the network allocation vector of the another node, and re-contends for a resource.

As described above, in a normal case, the source node sends a data frame to the destination node upon expiry of an interval of one SIFS after receiving the CTS frame of the destination node. However, if a case in which the source node does not send the data frame to the destination node occurs due to instability of a channel, to avoid a resource waste in this case, the destination node in the present invention actively determines, after waiting for an appropriate delay, whether the destination node receives the data sent by the source node. If the data is received, data sending and receiving may still be performed according to a normal process; if the data is not received, a resource occupied by the source node is released, and the node that sets the NAV of the node according to the CTS frame is instructed to re-contend for a channel resource after the NAV of the node is initialized. Therefore, a waste of the channel resource in a case in which the source node occupies the channel but does not send data may be effectively avoided.

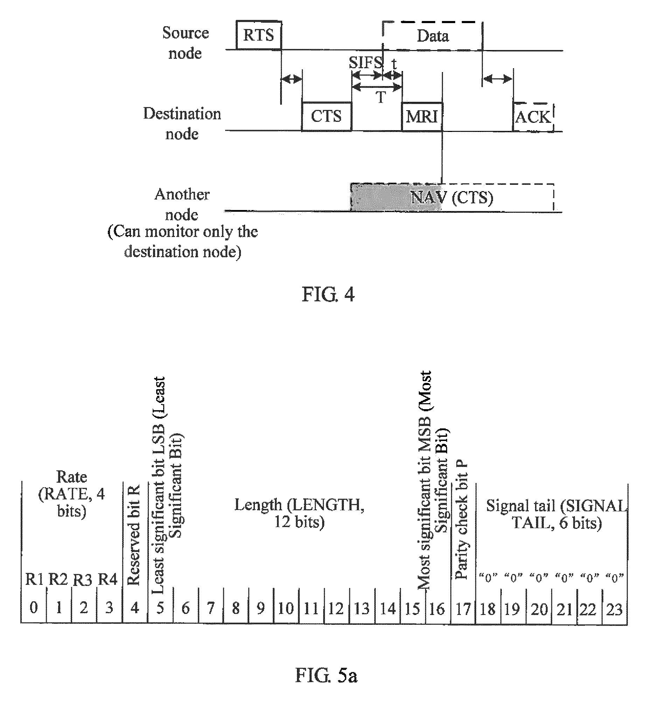

It should be noted that the foregoing appropriate delay, that is, the predetermined time T, is greater than an interval of an SIFS during which the source node sends the data frame to the destination node in a normal case. That is, in a technical solution of the present invention, if the data sent by the source node is received within a time interval t, it is considered to be a normal circumstance; if the data sent by the source node is still not received beyond T, it is considered to be an abnormal circumstance, and transmission suppression on the another node should be terminated, so that the another node and the source node re-start to contend for a channel resource. For details, refer to a schematic diagram shown in FIG. 4. A data frame and an ACK frame in dashed line boxes indicate frames that are not sent; a black part in a NAV (CTS) indicates a time during which transmission by a node is suppressed; a white part indicates a time during which a node ends a transmission suppression process in advance.

The following describes selection of the predetermined time T in the present invention.

As specified in the 802.11 standard, if a subsequent frame is not detected after (theoretical receiving time + Timeout Interval), it is considered to be timeout. Accordingly, in the technical solution of the present invention, the theoretical receiving time is aSIFSTime, Timeout Interval = aPHY-RX-START-Delay + aSlotTime, that is, t shown in FIG. 4; then, the predetermined time T = aSIFSTime + aPHY-RX-START-Delay + aSlotTime, where

aSIFSTime is a short interframe space time, and is a physical layer parameter. The SIFS mentioned in the foregoing is a MAC (Media Access Control, media access control) layer parameter, and aSIFSTime is a representation of an SIFS at a physical layer, and values of the two are equal;

aPHY-RX-START-Delay indicates a time required from detecting of start of frame transmission at the physical layer of a device to sending of a receiving instruction to an upper layer, that is, a response time at the physical layer, which is a physical layer parameter; and

aSlotTime is a timeslot length, and is also a physical layer parameter. The parameter is set considering an effect of a factor such as clock alignment on timing accuracy, that is, existing of a possible delay of one aSlotTime is allowed for the data frame.

The foregoing two parameters may be both defined and given a specific value in the standard. For example, in the 802.11n standard, when a frequency band of 2.4 GHz is used, aSlotTime = 9 μs or 20 us, and when a frequency band of 5 GHz is used, aSlotTime = 9 μs; accordingly, in the two cases, aPHY-RX-START-Delay = 33 μs. However, at an OFDM (Orthogonal Frequency Division Multiplexing, orthogonal frequency division multiplexing) physical layer in a standard earlier than the 802.11n standard, values of these parameters are related to bandwidth; for example, values of aSlotTime corresponding to 20/10/5 MHz are respectively 9/13/21 μs, and accordingly, values of aPHY-RX-START-Delay are respectively 25/49/97 μs.

It can be learned from the foregoing content that, when a maximum allowed delay time (that is, the predetermined time) for receiving the data frame by the destination node is determined, three factors need to be considered: one is the theoretical receiving time aSIFSTime; one is physical layer response time aPHY-RX-START-Delay; one is a timeslot aSlotTime.

In the present invention, to resolve a resource waste problem in a case in which a channel is not stable, a destination node monitors, within a predetermined time, data sent by a source node. If the data is detected, occupation of a channel resource by the source node is reserved; if the data is not detected, a channel resource allocated to the source node is released, and at the same time, transmission suppression on another node that can monitor data of the destination node is further removed, which ensures that the channel is used as appropriately as possible. In this way, not only a hidden node problem is resolved, but utilization of a network resource is improved.

In an actual application, nodes that can monitor data of the destination node may be classified into two types: one type is a node that not only can monitor the data of the destination node, but also can monitor data of the source node; the other type is a node that can monitor only the data of the destination node, but cannot monitor the data of the source node. The latter is a hidden node of the source node. The former not only may re-contend for a channel according to the resource release instruction, but also may further determine, by monitoring a data sending status of the source node, whether to remove a transmission suppression process of the former. However, a latter type of node cannot learn the data sending status of the source node, and can only remove a transmission suppression process in advance by using the resource release instruction. Therefore, in the present invention, to ensure a reasonable and fair contention for a channel resource by different nodes in a case in which the source node does not send data, the destination replaces the another node to monitor the data sending status of the source node, and instructs, when a channel resource needs to be released, the another node to initialize the NAV and re-contend for the resource.

In addition, it should be noted that, the so-called initializing a NAV refers to that a value of the NAV is set to a default value, where the default value may be zero in the prior art; that is, initializing the NAV is to control the NAV to return to zero. The default value may also be set to any value as required, for example, may be set to 1; then, when the NAV is set according to a time indicated by a Duration domain, the NAV needs to be set based on the default value 1; further, when the NAV is initialized, the value of the NAV is returned to the default value 1. The present invention imposes no limitation on setting of an initial default value of the NAV.

The resource release instruction that controls the another node that communicates with the destination node to initialize the NAV may be implemented by constructing a new control frame, or may be implemented by using a contention-free end frame CF-End, or may be implemented by modifying an existing frame, for example, modifying a resource reservation response CTS, an acknowledgment frame ACK (Acknowledgment), or a null data packet NDP (Null Data Packet), which are described one by one in the following.

1. Modifying a NDP frame to obtain the resource release instruction

The resource release instruction is used to release occupation of a channel by the source node and remove transmission suppression on the another node, and considering channel resource saving and power saving, the shorter a frame length is, the better; therefore, the NDP frame may be considered for use.

Generally, a frame actually sent consists of a physical header preamble and a MAC frame. The Preamble includes long/short training, a signal domain SIG, and the like; further, the SIG domain further includes information such as a transmit rate and a length of the MAC frame. Because the SIG domain may include some simple information, it may be that only the Preamble is sent and a subsequent MAC frame is not sent, and this type of frame that includes only the preamble but does not include the MAC frame is referred to as the NDP frame.

Referring to FIG. 5a, FIG. 5a shows a format diagram of the SIG domain in a physical header in a standard earlier than the 802.11n standard. Because the OFDM physical layer supports only eight transmit rates, eight reserved combinations in 16 combinations composed by a four-bit rate domain RATE still exists. Therefore, any one of these reserved combinations may be used to indicate a resource release indication, thereby modifying the NDP frame into the resource release instruction for use. Certainly, a LENGTH domain may further carry other information, such as a part of a MAC address of the source node or a current NAV value of the destination node. The part of the MAC address is obtained by capturing a part (for example, last 12 bits) of a complete MAC address or converting (for example, a Hash operation) a complete MAC address. Therefore, after receiving the resource release instruction obtained by modifying the NDP frame, the another node that can monitor the data of the destination node may determine a combination used by the RATE domain of the resource release instruction; if the RATE domain is one of the reserved combinations, the another node may initialize the NAV of the another node to a default value according to the resource release indication. A specific release process may be shown in the following:

If the LENGTH domain is a part of the MAC address of the source node, after receiving the resource release instruction, the another node first determines whether the another node needs to initialize the NAV according to the instruction. When a node monitors a CTS frame and sets a NAV according to the CTS frame, the node records an RA domain of the CTS domain, that is, needs to know a source node under whose effect transmission is suppressed this time. Therefore, after receiving the resource release instruction, the node may compare whether the RA domain recorded by the node matches the part of the MAC address in the LENGTH domain; if matched, initializes the NAV of the node to a default value according to the resource release instruction; if not matched, discards the resource release instruction.

If the LENGTH domain is a current NAV value of the destination node, after receiving the resource release instruction, the another node first determines whether an absolute value of a difference between the NAV value of the another node and the LENGTH domain is less than or equal to a predefined threshold; if yes, initializes the NAV of the another node to a default value according to the resource release instruction; if no, discards the resource release instruction. The foregoing threshold is a system parameter, and may be broadcasted in a beacon frame Beacon by an AP. This technical solution is the foregoing purpose of enabling the destination node to set the NAV of the destination node according to the RTS frame.

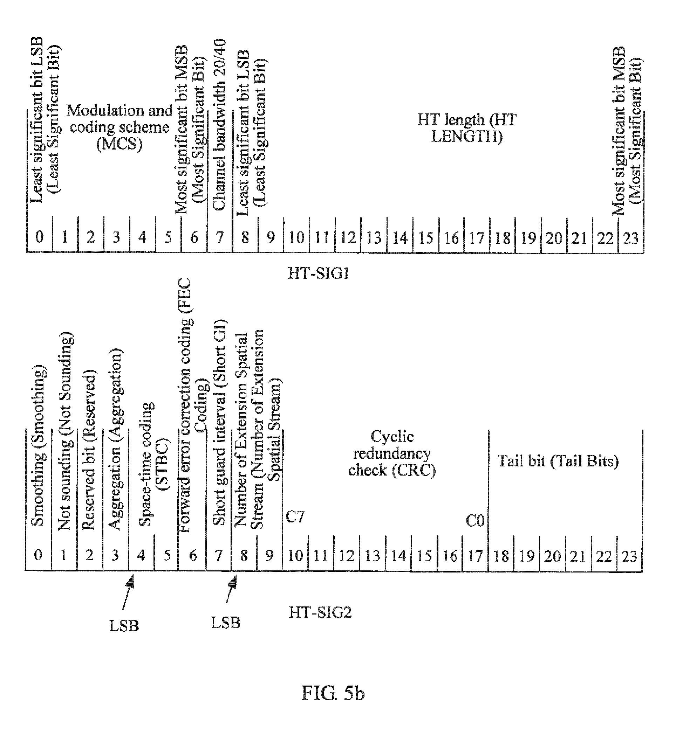

Referring to FIG 5b, FIG. 5b shows a format diagram of the SIG domain in a physical header in the 802.11n standard. Compared with FIG. 5a, a RATE field is replaced by a modulation and coding scheme (Modulation and Coding Scheme, MCS) field, which is used to indicate a transmit rate. A seven-bit MCS field may represent 128 modulation and coding schemes, and 77 modulation and coding schemes are supported in the 802.11n standard; therefore, there are 51 reserved combinations. Therefore, the resource release indication may be indicated by using any one of these reserved combinations, thereby modifying the NDP frame into the resource release instruction for use. It should be noted that in the SIG domain, except a cyclic redundancy check CRC, a tail bit Tail Bit, and a not sounding signal Not Sounding, another field may be used to carry information such as a part of the MAC address of the source node or a current NAV value of the destination node. A process of initializing the NAV of the another node by the another node according to the resource release instruction is similar to that at the OFDM physical layer, and details are not described herein again. In addition, to be compatible with a current standard, the Not Sounding field should be set to 1.

2. Modifying a CTS/ACK frame to obtain the resource release instruction

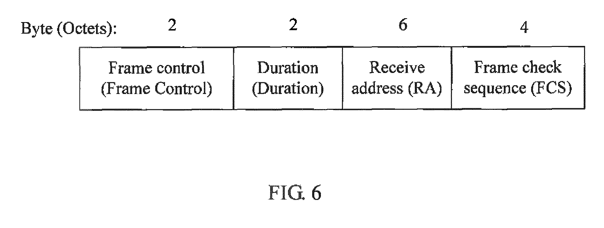

CTS and ACK are both control frames, and have a similar frame structure. Referring to FIG. 6, FIG. 6 shows a schematic diagram of the CTS/ACK frame, where Frame Control is a frame control domain; Duration is a duration domain (which is used to indicate a time required for sending and acknowledgment of subsequent data); RA is the MAC address of the source node; FCS is a frame check sequence. In the present invention, the resource release instruction may be obtained by modifying the Frame Control domain or the Duration domain, which is separately described in the following.

(1) Modifying the Frame Control domain to obtain the resource release instruction

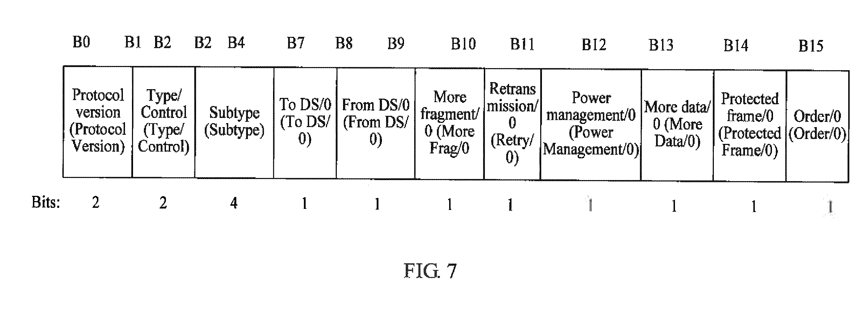

Referring to FIG. 7, FIG. 7 shows a schematic structural diagram of the Frame Control domain. CTS/ACK are both control frames, and there are some reserved bits in a control frame, for example: a bit To DS indicating that data goes to an external network; a bit From DS indicating that data is from an external network; a bit More Fragments indicating frame fragment transmission; a bit Retry indicating data retransmission; a bit Protected Frame indicating whether a encryption algorithm is used; a bit Order indicating that an HT control domain exists or sending needs to be in a strict sequence, and the foregoing reserved bits are not used in the control frame. Therefore, any reserved bit selected from the foregoing reserved bits may be used as a resource release indication bit, and CTS/ACK is modified into a resource release instruction bit for use.

It should be noted that, according to a meaning proximity principle and considering meaning of each reserved bit, the Retry bit may be preferably used as the resource release indication bit. Certainly, compared with other foregoing reserved bits, the Retry bit has no essential difference.

Therefore, after receiving the resource release instruction obtained by modifying the Frame Control domain, the another node that can monitor the data of the destination node may determine a value of a reserved bit used as the resource release instruction, and further determine whether to initialize the NAV.

(2) Modifying the Duration domain to obtain the resource release instruction

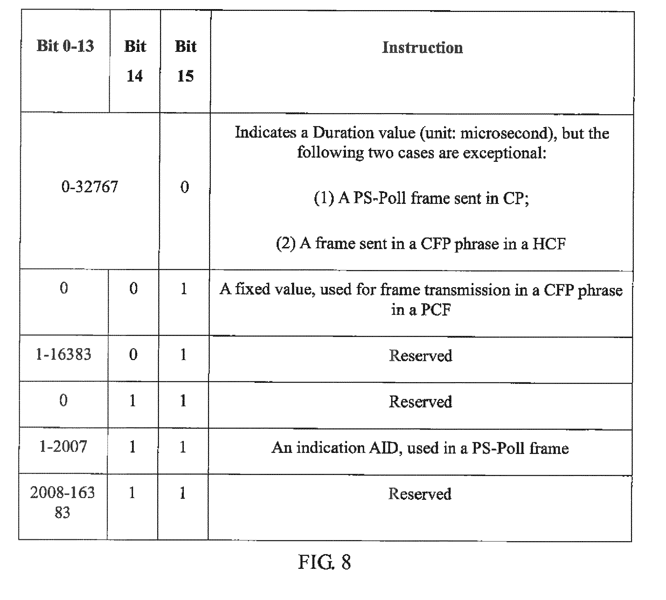

The Duration domain includes a total of 16 bits, 0-15. If used in a PS-Poll frame, the Duration domain is used to indicate an AID (Association Identifier, association identifier); if used in a frame transmitted during a CFP (Contention Free Period, contention free period) in a PCF (Point Coordination Function, point coordination function), the Duration domain is set to a fixed value 32768; if used in another frame, the Duration domain indicates a time required for sending and acknowledgment of subsequent data. In addition, there are some unused reserved combinations in the Duration domain; for details, refer to a schematic diagram shown in FIG. 8. Therefore, any one of these reserved combinations may be used to indicate the resource release indication, thereby modifying CTS/ACK into the resource release instruction for using.

Therefore, after receiving the resource release instruction obtained by modifying the Duration domain, the another node that can monitor the data of the destination node may determine a combination used by the Duration domain; if the combination is one of the reserved combinations, the another node may initialize the NAV of the another node to a default value according to the resource release indication. For example, a reserved combination whose two most significant bits are 1 and another bit is 0 is used as the resource release indication for use. If the another node that communicates with the destination node finds that the Duration domain is the reserved combination, the another node initializes the NAV and re-contends for a resource.

For the foregoing manner of obtaining the resource release instruction by modifying the CTS/ACK frame, the present invention further provides the following exemplary solution, which is specifically described as follows:

Considering a problem of device compatibility, while the Frame Control frame is modified, a time that is required for sending and acknowledgment of subsequent data and is indicated by the Duration domain of the CTS/ACK frame may be set to a default value of the NAV. If a solution in the prior art that the default value of the NAV is 0 is used, that is, the time indicated by the Duration domain is set to 0, in this way, compatibility between a new node device in the present invention and an old node device in the prior art (the new node device and the old node device herein refer to the another node that can monitor data of the destination node) is implemented.

Because the resource release instruction is obtained by modifying the CTS/ACK frame (specifically, by modifying the Frame Control domain), the instruction includes the Duration domain. Therefore, after receiving the resource release instruction, the old node device automatically reads the Duration domain, and sets a NAV of the old node device according to the Duration domain. If a time indicated by the Duration domain in the instruction is greater than a current NAV value set by the node, the node modifies the NAV of the node to the time (generally, the node chooses a larger value as the current NAV value of the node) indicated by the Duration domain; if the time indicated by the Duration domain is not greater than the current NAV value of the node, setting of the NAV of the node is not affected. Therefore, to ensure that the resource release instruction can not only instruct the node to end a transmission suppression process, but also does not affect setting of the NAV of the node, the time indicated by the Duration domain needs to be set to a default value of the NAV (the current NAV value of the node shall never be greater than the default value of the NAV).

However, so long as detecting the resource release indication in the Frame Control domain, the new node device that has a function of identifying the resource release instruction does not set the NAV of the new node device according to the Duration domain any longer. If a value of the resource release indication bit indicates that the NAV needs to be initialized, the node further needs to initialize the NAV of the node to a default value, and ends a transmission suppression process.

For the manner of obtaining the resource release instruction by modifying the CTS/ACK frame, a specific release process of a node may be expressed as follows:

After receiving the resource release instruction, the node first determines whether the NAV needs to be initialized, that is, determines whether the resource release indication bit in the Frame Control domain is a preset value (for example, if it is stipulated that a preset value of "1" indicates that a resource needs to be released, determines whether the indication bit is "1"), or determines whether the Duration domain uses one of the reserved combinations. If it is determined that the NAV needs to be initialized, the node further determines whether the instruction is for the node, which may be implemented by comparing an RA domain of a CTS frame recorded by the node with an RA domain of the resource release instruction. If RA domains are the same, the NAV of the node is initialized to a default value according to the resource release instruction; if RA domains are different, the resource release instruction is discarded.

Besides the foregoing obtaining of the resource release instruction by modifying an existing frame, a CF-End frame may further be directly used as the resource release instruction, and specific description is as follows:

In the prior art, after completing data interaction with the destination node, if the source node finds that there is a surplus of the reservation time, and the surplus is sufficient for sending one CF-End frame, the source node sends the CF-End frame to notify the destination node that the destination node may release a resource in advance. Accordingly, as a response action of the destination node, the destination node also returns a CF-End frame to the source node. Therefore, the another node that can monitor the data of the destination node initializes the NAV of the another node under a function of the response CF-End frame.

In conclusion, in the present invention, the CF-End frame may be used as the resource release instruction so as to remove transmission suppression on the another node in advance. However, in the prior art, a main body that triggers to send the CF-End frame is the source node, and a trigger condition is that there is a sufficient remaining resource after data interaction. In the technical solution of the present invention, the main body that triggers to send the CF-End frame is the destination node, and the trigger condition is that the destination node determines that the source node does not transmit data as agreed.

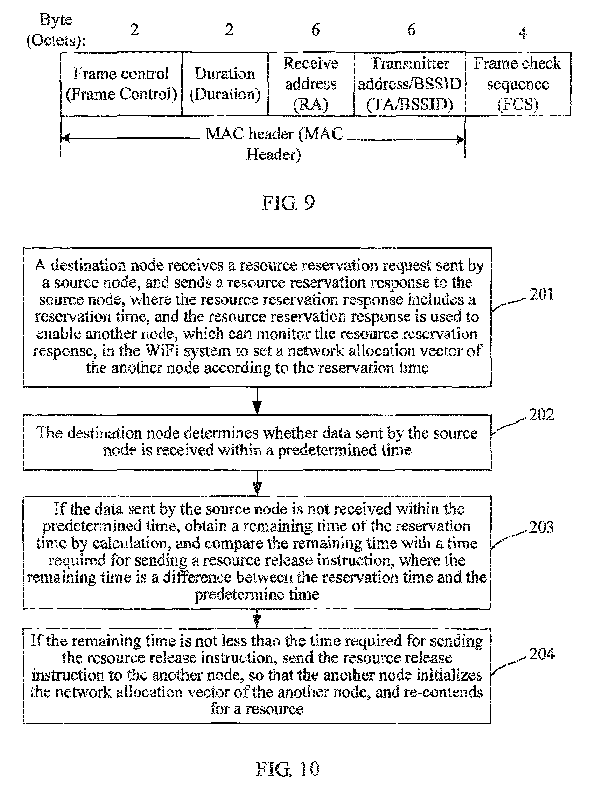

Referring to a schematic structural diagram of a CF-End frame shown in FIG. 9, a release process of a node in this manner may be expressed as follows:

A Duration domain of CF-End is set to a current NAV value of the destination node. After receiving a CF-End frame used as the resource release instruction, the another node first determines whether the another node needs to initialize the NAV according to the instruction, that is, determines whether an absolute value of a difference between a NAV value of the node and the Duration domain of the CF-End frame is less than or equal to a predetermined threshold; if yes, initializes the NAV of the node to a default value; if no, discards the resource release instruction. The foregoing threshold is a system parameter, and may be broadcasted in a Beacon frame by an AP.

Another method for implementing the resource release instruction by using CF-End is as follows: An RA domain is set to the MAC address of the source node, and a TA domain is set to a MAC address of the destination node. After receiving a CF-End frame used as the resource release instruction, the another node first determines whether the another node needs to initialize the NAV according to the instruction, which is implemented by comparing an RA domain of a CTS frame recorded by the node with an RA domain of the resource release instruction. If RA domains are the same, the NAV of the node is initialized to a default value; if RA domains are different, the resource release instruction is discarded.

Referring to FIG. 10, FIG. 10 shows a flowchart of a resource reservation method according to Embodiment 2 of the present invention, where the method is applied to a WiFi system, and the method includes:

Step 201: A destination node receives a resource reservation request sent by a source node, and sends a resource reservation response to the source node, where the resource reservation response includes a reservation time, and the resource reservation response is used to enable another node, which can monitor the resource reservation response, in the WiFi system to set a network allocation vector of the another node according to the reservation time.
Step 202: The destination node determines whether data sent by the source node is received within a predetermined time.
Step 203: If the data sent by the source node is not received within the predetermined time, obtain a remaining time of the reservation time by calculation, and compare the remaining time with a time required for sending a resource release instruction, where the remaining time is a difference between the reservation time and the predetermine time.
Step 204: If the remaining time is not less than the time required for sending the resource release instruction, send the resource release instruction to the another node, so that the another node initializes the network allocation vector of the another node, and re-contends for a resource.

In an exemplary solution in the present invention, when determining that the data sent by the source node is not received within an appropriate delay time, the destination node does not directly send the resource release instruction to the another node, because a certain time is required for sending the instruction. Therefore, it is first determined which of a current remaining time and a time used for sending the instruction is longer. The so-called remaining time refers to duration from a current moment to ending of the reservation time, that is, duration from the current moment to a time when the another node can re-contend for a channel; or which may also be understood as a time from the current moment to a time when the NAV is counted down to a default value, and a specific calculation manner is as follows: remaining time = reservation time - predetermined time.

If the time used for sending the instruction is less than the remaining time, obviously, a transmission suppression process of the another node may be ended in advance by using the resource release instruction, so that a node in a network re-contends for a channel resource, and a resource waste is reduced as much as possible.

If the time for sending the instruction is greater than the remaining time, a manner of initializing the NAV by using the resource release instruction prolongs a resource-wasting time on the contrary. Therefore, in this case, the destination node may not send the resource release instruction to the another node, but waits for the another node to end the transmission suppression process in a manner in which the NAV is counted down to a default value.

If the time used for sending the instruction is equal to the remaining time, the transmission suppression process of the another node is ended at a same moment in the two manners. Therefore, occupation of a channel by the source node may be terminated in any of the two manners, which is not limited in the present invention.

The following briefly describes an implementation process of the technical solution of the present invention with reference to specific applications.

Currently, there are two mechanisms to resolve a hidden node problem. One is a single CTS mechanism, which is applicable to a network that includes only an old node device or a network that includes only a new node device. The other is a double CTS mechanism, which is applicable to a network that includes both a new node device and an old node device. The so-called new node device refers to a node that supports an STBC (Space-Time Block Coding, space-time block coding) mode and a non-STBC mode. The old node device refers to a node that supports only the non-STBC mode.

For the single CTS mechanism, the implementation process of the technical solution of the present maybe described as follows:

(1) The source node sends an RTS frame to the destination node to request to perform channel resource reservation. A node that can monitor the RTS frame sets a NAV of the node to (CTS_Time+Data_Time+ACK_Time+3×SIFS), and starts to count in a countdown manner.

(2) After receiving the RTS frame, the destination node sends a CTS frame (which may be considered as a first resource reservation response, and SIFS may be considered as a first interframe space) to the source node after an interval of one SIFS. A node that can monitor the CTS frame sets a NAV of the node to (Data_Time+ACK_Time+2×SIFS), and starts to count in a countdown manner.

(3) The destination node starts to time from PHY-TXEND.confirm corresponding to the transmission of the CTS frame. If PHY-RXSTART.indication from a physical layer is not detected within a predetermined time (aSIFSTime + aPHY-RX-START-Delay + aSlotTime), it is considered that the CTS frame transferred by the destination node fails to be transmitted, and a channel resource that the source node requests to occupy may be released.

(4) There are two manners of releasing a channel resource occupied by the source node. One is waiting for the NAV of the another node to be counted down to zero, the other is sending a resource release instruction. To make a resource release process more appropriate, in the present invention, in a case in which it is determined that transmission of the CTS frame is failed, the following steps may further be performed:

The destination node obtains the remaining time of the reservation time by calculation, and determines whether the remaining time is less than the time required for transmitting the resource release instruction. If the remaining time is less than the time required for transmitting the resource release instruction, the destination node waits for the NAV of the another node to be counted down to zero in the first manner to release a channel resource; if the remaining time is not less than the time required for transmitting the resource release instruction, the resource release instruction (which may be considered as a first resource release instruction) is sent in the second manner, and the instruction directly controls the another node to initialize the NAV and release a channel resource.

(5) For the manner of sending the first resource release instruction, if a reserved bit Retry in a Frame Control domain is used as a resource release indication bit, and when the indication bit is "1 ", a node is controlled to initialize a NAV, after receiving the instruction, the another node reads the Retry bit, and if the Retry bit is "1 ", the node initializes the NAV to a default value regardless of a number to which the NAV is counted down, and re-contends for a channel resource with a node in a network. So far, a resource reservation process of the present invention is completed.

For the double CTS mechanism, the implementation process of the technical solution of the present may be described as follows:

(1) The source node sends an RTS frame to the destination node to request to perform channel resource reservation. A node that can monitor the RTS frame sets a NAV of the node to (CTS_Time+Data_Time+ACK_Time+3×SIFS), and starts to count in a countdown manner.

(2) After receiving the RTS frame, the destination node sends a CTS frame to the source node separately in an STBC mode and in a non-STBC mode. If a node that can monitor the CTS frame can identify a CTS frame that is in the STBC mode, the node sets a NAV of the node according to the CTS frame that is in the STBC mode; if the node can identify a CTS frame that is in the non-STBC mode, the node sets a NAV of the node according to the CTS frame that is in the non-STBC mode. A finally set NAV value is (Data_Time+ACK_Time+2×SIFS), and the node also starts to count in a countdown manner.

In this step, a specific process of sending the CTS frame by the destination node is as follows: After receiving the RTS frame, the destination node sends a first resource reservation response after an interval of one first interframe space, and then sends a second resource reservation response after an interval of one second interframe space.

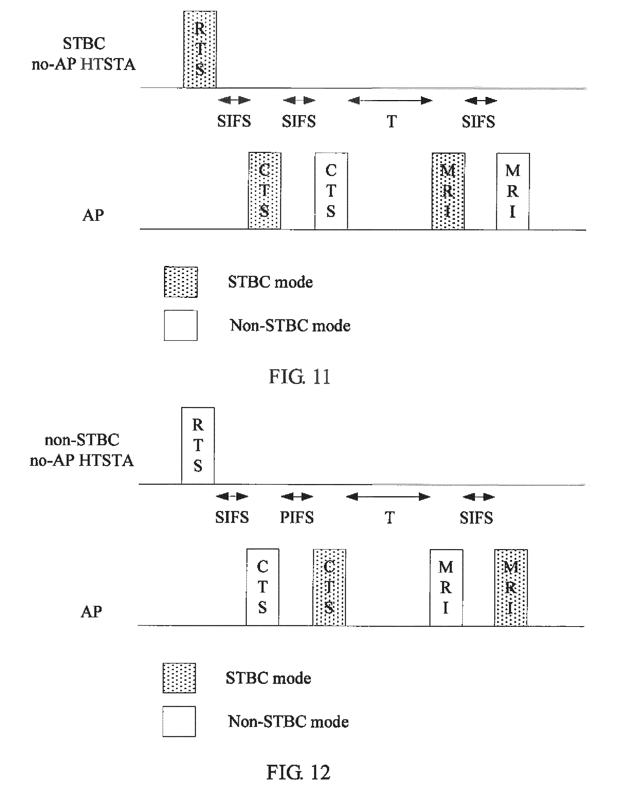

Referring to a schematic diagram shown in FIG. 11, if the source node sends an RTS frame that is in the STBC mode, the destination node sends a CTS (which may be considered as the first resource reservation response) that is in the STBC mode after an interval of one SIFS (which may be considered as the first interframe space), and then sends a CTS (which may be considered as the second resource reservation response) that is in the non-STBC mode after another interval of one SIFS (which may be considered as the second interframe space).

Alternatively, referring to a schematic diagram shown in FIG. 12, if the source node sends an RTS frame that is in the non-STBC mode, the destination node sends a CTS (which may be considered as the first resource reservation response) that is in the non-STBC mode after an interval of one SIFS (which may be considered as the first interframe space), and then further sends a CTS (which may be considered as the second resource reservation response) that is in the STBC mode after an interval of one PIFS (PCF Interframe Space, point coordination function interframe space, where PIFS>SIFS, and may be considered as the second interframe space).

For the schematic diagram shown in FIG. 12, because the new node device and the old node device both can send the RTS frame that is in the non-STBC mode, after receiving the RTS frame that is in the non-STBC mode, the destination node cannot determine a source node that the RTS frame comes from. In addition, if the source node is the old node device, upon expiry of an interval of one SIFS after the destination node returns a CTS frame, the source node sends a data frame to the destination node. If the destination node also sends a second CTS frame upon expiry of an interval of one SIFS after sending a first CTS frame, a collision is caused. Therefore, after receiving the RTS frame that is in the non-STBC mode, the destination node further sends a second CTS frame upon expiry of an interval of one PIFS after sending a first CTS frame, which avoids a collision with transmission by the old node device.

For the schematic diagram shown in FIG. 11, because only the new node device can send the RTS frame that is in the non-STBC mode, the destination node may determine a type of a source node that sends the RTS frame, and therefore, may send a second CTS frame after an SIFS.

(3) The destination node starts to time from PHY-TXEND.confirm at which the second CTS frame is sent. If PHY-RXSTART.indication from a physical layer is not detected within a predetermined time (aSIFSTime + aPHY-RX-START-Delay + aSlotTime), it is considered that the CTS frame transferred by the destination node fails to be transmitted, and a channel resource that the source node requests to occupy may be released.

(4) There are two manners of releasing a channel resource occupied by the source node. One is waiting for the NAV of the another node to be counted down to zero, the other is sending a resource release instruction. To make a resource release process more appropriate, in the present invention, in a case in which it is determined that transmission of the CTS frame is failed, the following steps may further be performed:

The destination node obtains the remaining time of the reservation time by calculation, and determines whether the remaining time is less than the time required for transmitting the resource release instruction. If the remaining time is less than the time required for transmitting the resource release instruction, the another node waits, in the first manner, for the NAV of the another node to be counted down to zero to release a channel resource; if the remaining time is not less than the time required for transmitting the resource release instruction, the resource release instruction is sent to the another node in the second manner, and the instruction directly controls the NAV of the another node to return to zero and release a channel resource.

In this step, a specific process of sending the resource release instruction by the destination node is as follows: when determining that the remaining time is relatively large, the destination node sends a first resource release instruction, and then further sends a second resource release instruction after an interval of one first interframe space. In this step, the time required for sending the resource release instruction refers to a sum of a time required for sending the first resource release instruction, a time required for sending the second resource release instruction and an interval of a first interframe space.

Referring to the schematic diagram shown in FIG. 11, the destination node sends a resource release instruction MRI (Medium Release Indication, which may be considered as the first resource release instruction) that is in the STBC mode, and then further sends an MRI (which may be considered as the second resource release instruction) that is in the non-STBC mode after an interval of one SIFS.

Referring to the schematic diagram shown in FIG. 12, the destination node sends a resource release instruction MRI (which may be considered as the first resource release instruction) that is in the non-STBC mode, and then further sends an MRI (which may be considered as the second resource release instruction) that is in the STBC mode after an interval of one SIFS.

It should be noted that, to improve network performance, and enable the source node to receive a CTS frame and sends a data frame to the destination as soon as possible, generally, the destination node first sends a CTS frame of a mode the same as that of an RTS frame (for example, if the RTS frame is in the STBC mode, the destination node first sends a CTS that is in the STBC mode, and then sends a CTS that is in the non-STBC mode after an interval of one interframe space). However, there is no requirement on a sequence of sending resource release instructions that are in the two modes. Certainly, if the network performance is not considered, and it is only required that the source node is enabled to receive the CTS frame, there is no requirement on a sequence for sending CTS frames that are in the two modes by the destination node. The present invention imposes no limitation thereto.

(5) For a manner of sending the first resource release instruction and the second resource release instruction, if a Retry bit of "1" indicates releasing of a resource, if a node that receives the instruction can identify an instruction that is in the STBC mode, the node initializes the NAV of the node to zero according to the instruction that is in the STBC mode; if the node can identify an instruction that is in the non-STBC mode, the node initializes the NAV of the node to a default value according to the instruction that is in the non-STBC, and re-contends for a channel resource with a node in a network. So far, a resource reservation process of the present invention is completed.

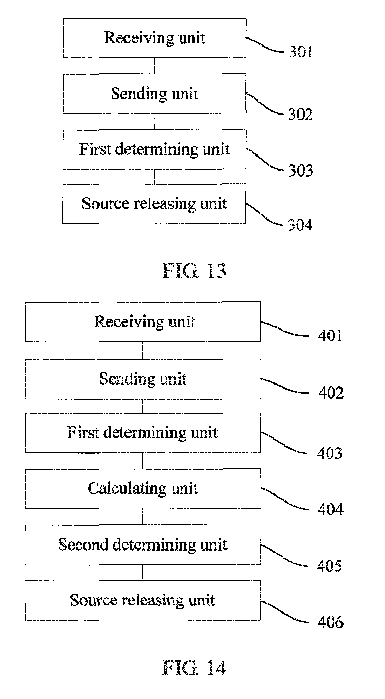

Referring to FIG. 13, FIG. 13 shows a schematic diagram of a resource reservation apparatus according to Embodiment 1 of the present invention, where the apparatus is applied to a WiFi system, and the apparatus includes:

a receiving unit 301, configured to receive a resource reservation request sent by a source node;
a sending unit 302, configured to send a resource reservation response to the source node after the resource reservation request is received (specifically, after an interval of one SIFS), where the resource reservation response includes a reservation time, and the resource reservation response is used to enable another node, which can monitor the resource reservation response, in the WiFi system to set a network allocation vector of the another node according to the reservation time;
a first determining unit 303, configured to determine whether data sent by the source node is received within a predetermined time; where
the predetermined time $T = aSIFSTime + aPHY\text{-}RX\text{-}START\text{-}Delay + aSlotTime$;
where aSIFSTime is a first interframe space; aPHY-RX-START-Delay is a physical layer response time; aSlotTime is a timeslot length; and
a resource releasing unit 304, configured to, when the first determining unit determines that the data sent by the source node is not received, send a resource release instruction to the another node, so that the another node initializes the network allocation vector of the another node, and re-contends for a resource.

It should be noted that, the resource release instruction sent by the resource releasing unit may be implemented by constructing a new control frame, or may be implemented by using a contention-free end frame CF-End frame, or may be implemented by modifying an existing frame, for example, modifying a resource reservation response CTS, an acknowledgment frame ACK, or a null data packet NDP. A specific implementation manner of the resource release instruction is described above method embodiments, and details are not described herein.

Currently, there are two mechanisms to resolve a hidden node problem. One is a single CTS mechanism, and the other is a double CTS mechanism.

For a solution of the single CTS mechanism:

the sending unit is specifically configured to send a first resource reservation response to the source node upon expiry of an interval of one first interframe space after the resource reservation request is received; and then the resource releasing unit is specifically configured to send a first resource release instruction to the another node,

EP 2 961 218 A1

so that the another node initializes the network allocation vector according to the first resource release instruction.

For a solution of the double CTS mechanism:

the sending unit is specifically configured to send a second resource reservation response to the source node upon expiry of an interval of one first interframe space, one first resource reservation response, and one second interframe space after the resource reservation request is received; and then
the resource releasing unit is specifically configured to send a first resource release instruction to the another node, and after an interval of one first interframe space, send a second resource release instruction to the another node, so that the another node initializes the network allocation vector according to the first resource release instruction or the second resource release instruction.

Referring to FIG. 14, FIG. 14 shows a schematic diagram of a resource reservation apparatus according to Embodiment 2 of the present invention, where the apparatus is applied to a WiFi system, and the apparatus includes:

a receiving unit 401, configured to receive a resource reservation request sent by a source node;
a sending unit 402, configured to send a resource reservation response to the source node after the resource reservation request is received, where the resource reservation response includes a reservation time, and the resource reservation response is used to enable another node, which can monitor the resource reservation response, in the WiFi system to set a network allocation vector of the another node according to the reservation time;
a first determining unit 403, configured to determine whether data sent by the source node is received within a predetermined time;
a calculating unit 404, configured to, when the first determining unit determines that the data sent by the source node is not received, calculate a remaining time of the reservation time, where the remaining time is a difference between the reservation time and the predetermined time;
a second determining unit 405, configured to compare the remaining time with a time required for sending the resource release instruction by the resource releasing unit; and
a resource releasing unit 406, configured to, when the second determining unit determines that the remaining time is not less than the time required for sending the resource release instruction, send the resource release instruction to the another node, so that the another node initializes the network allocation vector of the another node, and re-contends for a resource.

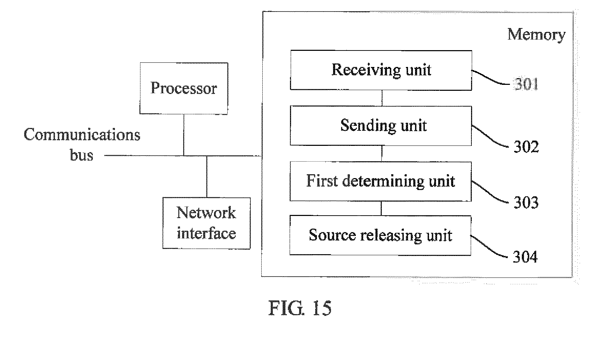

It should be noted that, for a solution of a single CTS mechanism, the time for sending the resource release instruction refers to a time required for sending a first resource release instruction; for a solution of a double CTS mechanism, the time for sending the resource release instruction refers to a sum of a time required for sending a first resource release instruction, a time required for sending a second resource release instruction, and an interval of a first interframe space, where the first resource release instruction and the second resource release instruction respectively refer to an instruction sent in an STBC mode and an instruction sent in a non-STBC mode.
Further, this embodiment of the present invention further separately provides a hardware constitution of the resource reservation apparatus. The resource reservation apparatus may include at least one processor (for example, CPU), at least one network interface or another communications interface, a memory, and at least one communications bus which is used to implement communication and connections among these apparatuses. The processor is configured to execute an executable module stored in the memory, for example, a computer program. The memory may include a high-speed random access memory (RAM: Random Access Memory) and may further include a non-volatile memory (non-volatile memory), for example, at least one disk memory. Through at least one network interface (with or without a cable), communication connection between a system gateway and at least one another network element may be implemented by using the Internet, a wide area network, a local area network, a metropolitan area network, and the like.
Referring to FIG. 15, in some implementation manners, a memory stores a program instruction, where the program instruction may be executed by a processor, and the program instruction includes a receiving unit 301, a sending unit 302, a determining unit 303, and a resource releasing unit 304. For specific implementation of each unit, refer to a corresponding unit disclosed in FIG 13. Alternatively, the program instruction may further include another unit disclosed in FIG 14, and details are not described herein again.
The solutions in the present invention can be described in the general context of executable computer instructions executed by a computer, for example, a program unit. Generally, the program unit includes a routine, program, object, component, data structure, and the like for executing a particular task or implementing a particular abstract data type. The solutions in the present invention may also be practiced in distributed computing environments in which tasks are performed by remote processing devices that are connected through a communications network. In a distributed computing environment, program units may be located in both local and remote computer storage media including storage devices.

The embodiments in this specification are all described in a progressive manner, for same or similar parts in the embodiments, reference may be made to these embodiments, and each embodiment focuses on a difference from other embodiments. Especially, an apparatus embodiment is basically similar to a method embodiment, and therefore is described briefly; for related parts, reference may be made to partial descriptions in the method embodiment. The described apparatus embodiment is merely exemplary. The units described as separate parts may or may not be physically separate, and parts displayed as units may or may not be physical units, may be located in one position, or may be distributed on a plurality of network units. Some or all of the modules may be selected according to actual requirements to achieve the objectives of the solutions of the embodiments. A person of ordinary skill in the art may understand and implement the embodiments of the present invention without creative efforts.

The foregoing describes the embodiments of the present invention in detail. The present invention is described in this specification by using specific implementation manners. The foregoing embodiments are described to help understand the method and the device of the present invention. Meanwhile, a person of ordinary skill in the art may change the specific implementation manners and application scope according to the idea of the present invention. Therefore, the specification shall not be construed as a limitation on the present invention.

**Claims**

1.  A resource reservation method, wherein the method is applied to a WiFi system, and the method comprises:

    receiving, by a destination node, a resource reservation request sent by a source node, and sending a resource reservation response to the source node, wherein the resource reservation response comprises a reservation time, and the resource reservation response is used to enable another node, which can monitor the resource reservation response, in the WiFi system to set a network allocation vector of the another node according to the reservation time; and
    determining, by the destination node, whether data sent by the source node is received within a predetermined time; and if the data is not received, sending a resource release instruction, so that the another node initializes the network allocation vector of the another node, and re-contends for a resource.

2.  The method according to claim 1, wherein before the sending a resource release instruction to the another node, the method further comprises:

    obtaining a remaining time of the reservation time by calculation, and comparing the remaining time with a time required for sending the resource release instruction; and if the remaining time is not less than the time required for sending the resource release instruction, sending the resource release instruction to the another node, wherein the remaining time is a difference between the reservation time and the predetermined time.

3.  The method according to claim 1 or 2, wherein:

    the resource reservation response is a first resource reservation response that is sent upon expiry of an interval of one first interframe space after the destination node receives the resource reservation request; and
    the sending a resource release instruction to the another node comprises:

    sending, by the destination node, a first resource release instruction to the another node, so that the another node initializes the network allocation vector according to the first resource release instruction.

4.  The method according to claim 1 or 2, wherein:

    the resource reservation response is a second resource reservation response sent upon expiry of an interval of one first interframe space, one first resource reservation response, and one second interframe space after the destination node receives the resource reservation request; and
    the sending a resource release instruction to the another node comprises:

    sending, by the destination node, a first resource release instruction to the another node, and sending a second resource release instruction to the another node after an interval of one first interframe space, so that the another node initializes the network allocation vector according to the first resource release instruction or the second resource release instruction.

**5.** The method according to any one of claims 1 to 4, wherein:

the predetermined time T = aSIFSTime + aPHY-RX-START-Delay + aSlotTime;
wherein aSIFSTime is a first interframe space; aPHY-RX-START-Delay is a physical layer response time; aSlotTime is a timeslot length.

**6.** The method according to any one of claims 1 to 5, wherein a manner of obtaining the resource release instruction is as follows:

modifying any one of the resource reservation response, an acknowledgment frame, and a null data packet to obtain the resource release instruction; or
using a contention-free end frame as the resource release instruction; or
constructing a new control frame as the resource release instruction.

**7.** The method according to claim 6, wherein:

if the resource release instruction is obtained by modifying the resource reservation response or the acknowledgment frame, a resource release indication bit is any reserved bit in a frame control domain; or
if the resource release instruction is obtained by modifying the resource reservation response or the acknowledgment frame, a resource release indication bit is any reserved combination in a duration domain; or
if the resource release instruction is obtained by modifying the null data packet, a resource release indication bit is any reserved combination in a modulation and coding scheme domain; wherein
the resource release indication bit is used to instruct the another node to initialize the network allocation vector of the another node.

**8.** The method according to claim 7, wherein:

if the resource release indication bit is any reserved bit in the frame control domain, the duration domain of the resource reservation response is set to a default value of the network allocation vector.

**9.** A resource reservation apparatus, wherein the apparatus is applied to a WiFi system, and the apparatus comprises:

a receiving unit, configured to receive a resource reservation request sent by a source node;
a sending unit, configured to send a resource reservation response to the source node after the resource reservation request is received, wherein the resource reservation response comprises a reservation time, and the resource reservation response is used to enable another node, which can monitor the resource reservation response, in the WiFi system to set a network allocation vector of the another node according to the reservation time;
a first determining unit, configured to determine whether data sent by the source node is received within a predetermined time; and
a resource releasing unit, configured to, when the first determining unit determines that the data sent by the source node is not received, send a resource release instruction to the another node, so that the another node initializes the network allocation vector of the another node, and re-contends for a resource.

**10.** The apparatus according to claim 1, wherein the apparatus further comprises:

a calculating unit, configured to obtain a remaining time of the reservation time by calculation, wherein the remaining time is a difference between the reservation time and the predetermined time; and
a second determining unit, configured to compare the remaining time with a time required for sending the resource release instruction by the resource releasing unit; and if the remaining time is not less than the time required for sending the resource release instruction, instruct the resource releasing unit to send the resource release instruction to the another node.

**11.** The apparatus according to claim 9 or 10, wherein:

the sending unit is specifically configured to send a first resource reservation response to the source node upon expiry of an interval of one first interframe space after the resource reservation request is received; and then the resource releasing unit is specifically configured to send a first resource release instruction to the another node, so that the another node initializes the network allocation vector according to the first resource release instruction.

12. The apparatus according to claim 9 or 10, wherein:

the sending unit is specifically configured to send a second resource reservation response to the source node upon expiry of an interval of one first interframe space, one first resource reservation response, and one second interframe space after the resource reservation request is received; and then
the resource releasing unit is specifically configured to send a first resource release instruction to the another node, and after an interval of one first interframe space, send a second resource release instruction to the another node, so that the another node initializes the network allocation vector according to the first resource release instruction or the second resource release instruction.

13. The apparatus according to any one of claims 9 to 12, wherein the predetermined time T during which the first determining unit determines whether the data sent by the source node is received is as follows:

$$T = aSIFSTime + aPHY\text{-}RX\text{-}START\text{-}Delay + aSlotTime;$$

wherein aSIFSTime is a first interframe space; aPHY-RX-START-Delay is a physical layer response time; aSlotTime is a timeslot length.

Node 1                    Node 3

○ ────────→ ⊗ ◄╌╌╌╌╌╌ ○ ────────→ ○

Node 2                    Node 4

**FIG. 1**

| |
|---|
| A destination node receives a resource reservation request sent by a source node, and sends a resource reservation response to the source node, where the resource reservation response includes a reservation time, and the resource reservation response is used to enable another node, which can monitor the resource reservation response, in a WiFi system to set a network allocation vector of the another node according to the reservation time |

╱101

| |
|---|
| The destination node determines whether data sent by the source node is received within a predetermined time; and if the data is not received, sends a resource release instruction to the another node, so that the another node initializes the network allocation vector of the another node, and re-contends for a resource |

╱102

**FIG. 2**

**FIG. 3**

FIG. 4

FIG. 5a

FIG. 5b

Byte (Octets):      2              2              6              4

| Frame control (Frame Control) | Duration (Duration) | Receive address (RA) | Frame check sequence (FCS) |
| --- | --- | --- | --- |

FIG. 6

EP 2 961 218 A1

| B0 | B1 B2 | B2 B4 | B7 | B8 B9 | B10 | B11 | B12 | B13 | B14 | B15 |
|---|---|---|---|---|---|---|---|---|---|---|
| Protocol version (Protocol Version) | Type/ Control (Type/ Control) | Subtype (Subtype) | To DS/0 (To DS/ 0) | From DS/0 (From DS/ 0) | More fragment/ 0 (More Frag/0 | Retrans mission/ 0 (Retry/ 0) | Power management/0 (Power Management/0) | More data/ 0 (More Data/0) | Protected frame/0 (Protected Frame/0) | Order/0 (Order/0) |

Bits:     2        2        4        1        1        1        1        1        1        1        1

FIG. 7

| Bit 0-13 | Bit 14 | Bit 15 | Instruction |
|---|---|---|---|
| 0-32767 | | 0 | Indicates a Duration value (unit: microsecond), but the following two cases are exceptional:<br><br>(1) A PS-Poll frame sent in CP;<br><br>(2) A frame sent in a CFP phrase in a HCF |
| 0 | 0 | 1 | A fixed value, used for frame transmission in a CFP phrase in a PCF |
| 1-16383 | 0 | 1 | Reserved |
| 0 | 1 | 1 | Reserved |
| 1-2007 | 1 | 1 | An indication AID, used in a PS-Poll frame |
| 2008-16383 | 1 | 1 | Reserved |

FIG. 8

| Byte (Octets): | 2 | 2 | 6 | 6 | 4 |
|---|---|---|---|---|---|
| | Frame control (Frame Control) | Duration (Duration) | Receive address (RA) | Transmitter address/BSSID (TA/BSSID) | Frame check sequence (FCS) |

←——————— MAC header (MAC Header) ——————→

FIG. 9

| A destination node receives a resource reservation request sent by a source node, and sends a resource reservation response to the source node, where the resource reservation response includes a reservation time, and the resource reservation response is used to enable another node, which can monitor the resource reservation response, in the WiFi system to set a network allocation vector of the another node according to the reservation time | 201 |
|---|---|

↓

| The destination node determines whether data sent by the source node is received within a predetermined time | 202 |
|---|---|

↓

| If the data sent by the source node is not received within the predetermined time, obtain a remaining time of the reservation time by calculation, and compare the remaining time with a time required for sending a resource release instruction, where the remaining time is a difference between the reservation time and the predetermine time | 203 |
|---|---|

↓

| If the remaining time is not less than the time required for sending the resource release instruction, send the resource release instruction to the another node, so that the another node initializes the network allocation vector of the another node, and re-contends for a resource | 204 |
|---|---|

FIG. 10

STBC
no-AP HTSTA

R
T
S

SIFS   SIFS        T        SIFS

AP

C
T
S

C
T
S

M
R
I

M
R
I

☐ STBC mode

☐ Non-STBC mode

FIG. 11

non-STBC
no-AP HTSTA

R
T
S

SIFS   PIFS        T        SIFS

AP

C
T
S

C
T
S

M
R
I

M
R
I

☐ STBC mode

☐ Non-STBC mode

FIG. 12

Receiving unit — 301

Sending unit — 302

First determining unit — 303

Source releasing unit — 304

FIG. 13

Receiving unit — 401

Sending unit — 402

First determining unit — 403

Calculating unit — 404

Second determining unit — 405

Source releasing unit — 406

FIG. 14

Processor

Communications bus

Network interface

Memory

Receiving unit — 301

Sending unit — 302

First determining unit — 303

Source releasing unit — 304

FIG. 15

# INTERNATIONAL SEARCH REPORT

| | International application No. |
|---|---|
| | PCT/CN2014/074936 |

**A. CLASSIFICATION OF SUBJECT MATTER**

H04W 28/18 (2009.01) i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS, VEN: resource, reservation, source node, target node, request, reponse, network allocation vector, time

**C. DOCUMENTS CONSIDERED TO BE RELEVANT**

| Category* | Citation of document, with indication, where appropriate, of the relevant passages | Relevant to claim No. |
|---|---|---|
| X | CN 102026299 A (HUAWEI TECHNOLOGIES CO LTD) 20 April 2011 (20.04.2011) description, paragraphs [0048]-[0076] | 1, 9 |
| A | CN 102137453 A (CUI, Wei et al.) 27 July 2011 (27.07.2011) the whole document | 1-13 |
| A | CN 101247339 A (MICROSYSTEM INST BRANCH CENT JIAXING CENT) 20 August 2008 (20.08.2008) the whole document | 1-13 |

☐ Further documents are listed in the continuation of Box C.     ☒ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&" document member of the same patent family |

| Date of the actual completion of the international search | Date of mailing of the international search report |
|---|---|
| 07 July 2014 | 22 July 2014 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>LI, Zhi<br><br>Telephone No. (86-10) 62411477 |

Form PCT/ISA /210 (second sheet) (July 2009)

## INTERNATIONAL SEARCH REPORT
### Information on patent family members

International application No.

PCT/CN2014/074936

| Patent Documents referred in the Report | Publication Date | Patent Family | Publication Date |
|---|---|---|---|
| CN 102026299 A | 20 April 2011 | CN 102026299 B | 09 October 2013 |
| CN 102137453 A | 27 July 2011 | None | |
| CN 101247339 A | 20 October 2008 | CN 101247339 B | 29 December 2010 |

Form PCT/ISA/210 (patent family annex) (July 2009)

EP 2 961 218 A1

**REFERENCES CITED IN THE DESCRIPTION**

**Patent documents cited in the description**

- CN 201310121350